(19) Europäisches Patentamt / European Patent Office / Office européen des brevets

(11) **EP 3 199 749 A1**

(12) **DEMANDE DE BREVET EUROPEEN**

(43) Date de publication:
**02.08.2017 Bulletin 2017/31**

(51) Int Cl.:
***E21B 49/00*** *(2006.01)*

(21) Numéro de dépôt: **16306687.1**

(22) Date de dépôt: **15.12.2016**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD**

(30) Priorité: **26.01.2016 FR 1650582**

(71) Demandeur: **IFP Énergies nouvelles
92852 Rueil-Malmaison (FR)**

(72) Inventeurs:
• **BOURBIAUX, Bernard
  92500 RUEIL MALMAISON (FR)**
• **DING, Didier Yu
  78230 LE PECQ (FR)**

(54) **PROCEDE POUR L'EXPLOITATION D'UN GISEMENT DE FLUIDE TRAVERSE PAR DES FRACTURES AU MOYEN D'UNE SIMULATION D'ECOULEMENT BASEE SUR UN FLUX D'ECHANGE ET UN FACTEUR CORRECTIF**

(57) La présente invention concerne un procédé pour optimiser un gisement de fluide traversé par un réseau de fractures. Pour ce procédé, on discrétise le gisement en une représentation maillée, on utilise une approche « double-milieu », et on détermine les flux d'échange entre les mailles, ainsi que des facteurs correctifs. Les facteurs correctifs sont dépendants de la pression initiale et de la pression minimale de production du gisement. Au moyen de ces flux et de ces facteurs correctifs, on simule les écoulements de fluide(s) dans le gisement.

EP 3 199 749 A1

**Description**

La présente invention concerne le domaine de l'exploitation de gisements souterrains, tels que des gisements d'hydrocarbures, notamment lorsque ceux-ci comportent un réseau de fractures.

La méthode selon l'invention, convient notamment pour l'étude des propriétés hydrauliques de terrains fracturés, et notamment pour étudier les déplacements d'hydrocarbures dans des gisements souterrains.

En particulier, l'invention concerne une méthode destinée à prédire les écoulements de fluides susceptibles de se produire à travers ce milieu, pour simuler une production d'hydrocarbures suivant divers scénarios de production.

L'industrie pétrolière, et plus précisément l'exploration et l'exploitation de gisements, notamment pétroliers, nécessitent d'acquérir une connaissance aussi parfaite que possible de la géologie souterraine pour fournir de façon efficace une évaluation des réserves, une modélisation de la production, ou la gestion de l'exploitation. En effet, la détermination de l'emplacement d'un puits de production ou d'un puits d'injection, la constitution de la boue de forage, les caractéristiques de complétion, le choix d'un procédé de récupération des hydrocarbures (tel que l'injection d'eau par exemple) et des paramètres nécessaires à la mise en oeuvre de ce procédé (tels que la pression d'injection, le débit de production,...) nécessitent de bien connaître le gisement. Connaître le gisement signifie notamment connaître les propriétés pétrophysiques du sous-sol en tout point de l'espace.

Pour ce faire, depuis longtemps, l'industrie pétrolière allie les mesures sur champ (in situ) aux modélisations expérimentales (réalisées au laboratoire) et/ou numériques (réalisées au moyen de logiciels). Les modélisations des gisements pétroliers constituent donc une étape technique indispensable à toute exploration ou exploitation de gisement. Ces modélisations ont pour but de fournir une description du gisement.

Les réservoirs fissurés constituent un type extrême de réservoirs hétérogènes comportant deux milieux contrastés, un milieu matriciel contenant la plus grande part de l'huile en place et présentant une faible perméabilité, et un milieu fissuré représentant moins de 1 % de l'huile en place et hautement conducteur. Le milieu fissuré lui-même peut être complexe, avec différents ensembles de fissures caractérisés par leur densité, longueur, orientation, inclinaison et ouverture respectives.

Les ingénieurs en charge de l'exploitation de réservoirs fracturés, ont besoin de parfaitement connaître le rôle des fractures. On appelle "*fracture*", une discontinuité plane, de très faible épaisseur par rapport à son extension, et qui représente un plan de rupture d'une roche du gisement. D'une part, la connaissance de la distribution et du comportement de ces fractures permet d'optimiser la localisation et l'espacement entre les puits que l'on compte forer au travers du gisement pétrolifère. D'autre part, la géométrie du réseau de fractures conditionne le déplacement des fluides tant à l'échelle du réservoir qu'à l'échelle locale où elle détermine des blocs matriciels élémentaires dans lesquels l'huile est piégée. Connaître la distribution des fractures, est donc très utile, aussi, à un stade ultérieur, pour l'ingénieur de réservoir qui cherche à calibrer les modèles qu'il construit pour simuler les gisements afin d'en reproduire ou prédire les courbes de production passées ou futures. A ces fins, les spécialistes de géosciences disposent d'images tridimensionnelles des gisements, permettant de localiser un grand nombre de fractures.

Ainsi, pour reproduire ou prédire (i.e. "simuler") la production d'hydrocarbures lors de la mise en production d'un gisement suivant un scénario de production donné (caractérisé par la position des puits, la méthode de récupération, ...), le spécialiste en ingénierie de réservoir met en oeuvre un logiciel de calcul, appelé « simulateur de réservoir » (ou « simulateur d'écoulement »), qui calcule les écoulements et l'évolution des pressions au sein du réservoir, les résultats de ces calculs lui permettant de prévoir et d'optimiser le gisement en termes de débit et/ou de quantité d'hydrocarbures récupérés. Le calcul du comportement du réservoir suivant un scénario de production donné constitue une « simulation de réservoir ».

**État de la technique**

On connaît une méthode pour optimiser l'exploitation d'un gisement de fluide traversé par un réseau de fractures, dans laquelle on simule des écoulements de fluides dans le gisement au moyen d'une modélisation simplifiée mais réaliste du gisement. Cette représentation simplifiée est appelée "approche double milieu", elle est proposée par Warren J.E. et al. dans "The Behavior of Naturally Fractured Reservoirs", SPE Journal (septembre 1963), 245-255. Cette technique consiste à considérer le milieu fracturé comme deux continua échangeant des fluides entre eux : des blocs matriciels et des fractures. On parle alors de modèle « double milieu » ou « double porosité ». Ainsi, la modélisation en "double milieu" d'un gisement fracturé consiste à discrétiser ce gisement en deux ensembles de mailles (appelés grilles) superposés, constituant la grille "fissure" et la grille "matrice". Chaque volume élémentaire du gisement fracturé est ainsi conceptuellement représenté par deux mailles, l'une "fissure" et l'autre "matrice", couplées entre elles (c'est-à-dire échangeant des fluides). Dans la réalité du champ fracturé, ces deux mailles représentent l'ensemble des blocs matriciels délimités par des fractures présentes en cet endroit du réservoir. En effet, le plus souvent, les mailles ont des dimensions latérales hectométriques (couramment 100 ou 200 m) compte tenu de la taille des champs et des possibilités limitées des logiciels de simulation en termes de capacité et temps de calcul. Il en résulte que, pour la plupart des champs fracturés, le volume élémentaire (maille) de réservoir fracturé renferme d'innombrables fractures formant un réseau complexe délimitant de multiples blocs matriciels de dimensions et formes variables suivant le contexte géologique. Chacun des blocs réels constitutifs échange des fluides avec les fractures qui l'entourent à un rythme (débit) qui lui est propre car dépendant des dimensions et de la forme de ce bloc particulier.

Face à une telle complexité géométrique du milieu réel, la démarche consiste, pour chaque volume élémentaire (maille) de réservoir, à représenter le milieu fracturé réel comme un ensemble de blocs matriciels tous identiques, parallélépipédiques, délimités par un réseau orthogonal et régulier de fractures orientées suivant les directions principales d'écoulement : pour chaque maille, on définit ainsi un bloc matriciel, dit « représentatif » (de la distribution réelle (géologique) des blocs), unique et de forme parallélépipédique. Il est alors possible de formuler et calculer les flux d'échange matrice-fissure pour ce bloc "représentatif", et d'en multiplier le résultat par le nombre de tels blocs dans le volume élémentaire (maille) pour obtenir le flux à l'échelle de cette maille.

Dans la version "simple perméabilité" du modèle double milieu, l'écoulement des fluides à l'échelle du réservoir, est supposé ne s'effectuer que via les fractures (i.e. via la seule grille fracture), des échanges de fluides intervenant localement entre les fractures et les blocs matriciels (i.e. entre les deux mailles d'un couple donné de mailles "fracture" et "matrice" représentant le réservoir poreux fracturé en un endroit donné du champ). Dans la version "double perméabilité" de ce même modèle, l'écoulement des fluides s'opère au sein des deux milieux "fracture" et "matrice" à l'échelle du réservoir, avec toujours des échanges fracture-matrice locaux de fluides intervenant localement entre les fractures et les blocs matriciels.

Une telle représentation (modélisation) du réservoir fracturé réel (géologique) est utilisée pour reproduire, i.e. "simuler", la réponse (le comportement) du champ lors de sa mise en production. Pour ce faire, des équations d'écoulement ou transfert sont formulées, explicitées et résolues pour chacune des mailles constitutives du modèle suivant la méthode résumée ci-après : l'ensemble des équations mathématiques appliquées au double milieu représentant le réservoir fracturé constitue le simulateur de réservoir double milieu, bien connu des spécialistes.

Un simulateur de réservoir permet, à partir de données d'entrées concernant d'une part les deux milieux (matrice et fracture), et d'autre part les fluides que ce double milieu contient, de déterminer, à divers instants ("pas de temps") et en chaque maille, les valeurs de divers paramètres quantifiant l'état de ces deux milieux tels que les saturations (en huile, gaz, eau), les pressions, les concentrations, les températures,... Ce simulateur résout deux jeux d'équations, l'un relatif au milieu matriciel, et l'autre relatif au milieu fracturé. Pour mémoire, on rappelle que ces équations expriment les bilans de masse (par constituant) et d'énergie pour chaque couple de mailles "fracture" et "matrice" représentant un volume élémentaire du réservoir fracturé poreux réel : ces bilans de masse font intervenir des flux d'échange entre mailles du même milieu (fracture ou matrice) voisines dans l'espace, le terme d'échange matrice-fissure objet de la présente invention, un éventuel terme d'injection ou production si un puits traverse le volume élémentaire considéré, l'ensemble des termes de flux précédents étant égal au terme d'accumulation de matière ou d'énergie de la maille considérée. Ainsi, les équations relatives au milieu "matrice" et au milieu "fracture" en chaque point du réservoir sont couplées, via un terme d'échange, décrivant les flux d'échange (de masse ou d'énergie) entre la roche (matrice) poreuse et les fractures qui la traversent : cette modélisation des échanges matrice - fracture est essentielle, car la matrice renferme le plus souvent l'essentiel des réserves à produire.

La méthode adoptée jusqu'à ce jour, pour formuler ces échanges matrice-fracture (ou matrice-fissure), consiste, pour chaque couple de mailles fracture et matrice discrétisant le modèle double milieu :

- d'une part à déterminer les dimensions de blocs matriciels identiques (en dimensions et forme) supposés représentatifs de la distribution réelle complexe des blocs présents dans ce volume élémentaire de réservoir ;

- puis à formuler et calculer le flux d'échange matrice-fissure en fonction des dimensions de ce bloc représentatif ainsi calculées (ce flux est alors égal au flux exprimé pour un tel bloc représentatif multiplié par le nombre de tels blocs dans la maille considérée).

Ainsi, les formulations d'échange adoptées à ce jour dans les simulateurs de réservoir fracturé, qui s'appuient sur une représentation très simplifiée de ce type de réservoir, s'avèrent très approximatives et incapables de rendre fidèlement compte de l'ensemble des mécanismes d'échange susceptibles d'être mis en jeu, qui comprennent la diffusivité de pression, la capillarité, la gravité, la diffusion moléculaire, la conduction et des forces visqueuses.

En effet, d'une part, l'échange entre blocs de matrice et fissures est exprimé à l'échelle de la maille (hectométrique) du modèle de simulation en considérant qu'un bloc matriciel de dimensions et forme fixées est représentatif de ("équivalent" à) l'ensemble des blocs réels (géologiques) de la maille.

D'autre part, l'échange est supposé pseudo-permanent c'est-à-dire que le flux d'échange aux limites de ce bloc équivalent est proportionnel à la différence de potentiel (ex.: la différence de pression, la différence de température, ...) entre les deux milieux matrice et fissure. Pour chaque milieu, ce potentiel (température par exemple) est supposé uniforme au sein d'un milieu donné, donc dans le cas présent uniforme (constant) au sein du bloc représentatif de la maille considérée à l'instant de simulation considéré. Or, les échanges entre fissures et blocs, notamment s'ils impliquent plusieurs phases fluides, ne sont pas instantanés. De plus, en dehors des effets gravitaires et d'entraînement visqueux (par l'écoulement de fracture), ces échanges concernent d'abord la périphérie des blocs avant de se propager vers leur centre. Cette non-uniformité spatiale du changement d'état des blocs matriciels induit aussi une évolution temporelle (*i.e.* non stationnaire ou transitoire), puisque le fluide de la fracture accède beaucoup plus rapidement aux bordures du bloc qu'à son centre. Une restitution fidèle du changement d'état des blocs nécessiterait ainsi de discrétiser le bloc afin d'y simuler les déplacements à une échelle locale (intra-bloc), la résultante de ces écoulements à la frontière bloc - fracture constituant alors une estimation beaucoup plus précise de l'échange matrice - fracture au cours du temps.

Par exemple, il convient de rappeler que de multiples expressions de ce facteur de forme σ constant (*i.e.* uniquement dépendant des dimensions a, b, c du bloc et indépendant de la variable résolue par le simulateur, telle que la saturation en eau par exemple) ont été proposées au cours des dernières décennies : par exemple, la première d'entre elles, proposée par Kazemi *et al*. en 1976 (réf. : Kazemi, H., Merrill, L.S., Porterfield, K.L. and Zeman, P.R.: "Numerical Simulation of Water-Oil Flow in Naturally Fractured Reservoirs", SPE Journal (Dec. 1976) 317), définit le facteur de forme constant de la manière suivante :

$$\sigma = \frac{4}{a^2} + \frac{4}{b^2} + \frac{4}{c^2}$$

Afin de prendre en compte le caractère transitoire du flux d'échange, les demandes de brevet FR 2 925 726 A (US 8 386 225 B) et FR 3 007 165 A (US 2014-0372042 A1) décrivent une méthode, dans laquelle le flux d'échanges transitoires entre les blocs poreux et les fractures est déterminé au moyen d'une fonction de forme (appelée également facteur de forme) transitoire. Cette méthode est adaptée, notamment pour les échanges diphasiques de fluides peu compressibles tels que les échanges par imbibition eau-huile par exemple.

Toutefois, dans le cas de milieux matriciels très peu perméables, la prévision des échanges entre matrice et fractures durant la période dite des temps courts ou transitoire (période au cours de laquelle les échanges, dits transitoires, ne sont pas encore pseudo-permanents) est très imprécise, et la durée de cette période transitoire est longue. Or, les modèles habituels simulent la production aux temps courts comme aux temps longs, alors que le comportement en écoulement aux temps courts n'est pas le même, ce qui induit des erreurs importantes pour les champs dont les blocs de matrice très peu perméable demeurent longtemps dans cet état transitoire de production. Avec les méthodes de l'art antérieur, il s'est avéré impossible de reproduire les prévisions de référence (*i.e.* de reproduire les simulations effectuées au moyen d'un modèle dit de référence, c'est-à-dire maillant finement les blocs matriciels) au moyen d'un simulateur double milieu conventionnel pour des champs fracturés à gaz. En outre, il n'a pas non plus été possible de les reproduire au moyen du même simulateur incorporant des améliorations du calcul des échanges transitoires aux temps courts.

Pour pallier ces inconvénients, la présente invention concerne un procédé pour optimiser un gisement de fluide traversé par un réseau de fractures. Pour ce procédé, on discrétise le gisement en une représentation maillée, et d'une approche « double-milieu », et on détermine les flux d'échange entre les mailles, ainsi que des facteurs correctifs. Les facteurs correctifs sont dépendants de la pression initiale et de la pression minimale de production du gisement. Au moyen de ces flux et de ces facteurs correctifs, on simule les écoulements de fluide(s) dans le gisement. Ainsi, il est possible de simuler, de manière représentative, les écoulements de tout type de fluide (compressible ou non), y compris dans des matrices peu perméables.

**Le procédé selon l'invention**

L'invention concerne un procédé pour l'exploitation d'un gisement de fluide traversé par un réseau de fractures, dans lequel, à partir de mesures de propriétés relatives audit gisement, on construit une représentation maillée dudit gisement, chaque maille de ladite représentation comportant un milieu matriciel et un milieu fracturé, et dans lequel on connaît la pression initiale dudit gisement et la pression minimale de production dudit gisement. Pour ce procédé, on réalise les étapes suivantes :

　　a) on détermine en chaque maille un flux d'échange intervenant entre ledit milieu matriciel et ledit milieu fracturé ;
　　b) on détermine un facteur correctif dudit flux d'échange au moyen de ladite pression initiale dudit gisement et de ladite pression minimale de production dudit gisement ;
　　c) on simule les écoulements dudit fluide dans ledit gisement au moyen d'un simulateur d'écoulement, dudit flux d'échange et dudit facteur correctif ; et
　　d) on optimise l'exploitation dudit gisement au moyen de ladite simulation desdits écoulements.

Selon un mode de réalisation de l'invention, lesdites étapes a) et b) sont réalisées dans cet ordre, simultanément ou dans l'ordre inverse.

Avanatageusement, ledit facteur correctif dudit flux d'échange est obtenu au moyen d'une formulation en pseudo-pression des équations d'écoulement du fluide dans le gisement.

Conformément à une mise en oeuvre de l'invention, on détermine ledit facteur correctif pour les régimes d'échanges transitoires.

Selon une variante, ledit facteur correctif pour les régimes d'échanges transitoires en une dimension $\beta_{m-1D}^{ST}(\overline{P})$ s'écrit par une formule du type :

$$\beta_{m-1D}^{ST}(\overline{P}) = \frac{P_{ref}/\mu_{ref}Z_{ref}}{\overline{P}/\mu Z} \frac{8}{\pi^3} \frac{(m_f - m_i)^2}{[P_f - \overline{P}][m(\overline{P}) - m_i]}$$

avec

- $P_{ref}$ une pression de référence,
- $\mu_{ref}$ la viscosité à la pression de référence,
- $Z_{ref}$ le facteur de compressibilité dudit fluide à ladite pression de référence,
- $\overline{P}$ la pression moyenne d'un bloc matriciel dudit milieu matriciel,
- $\mu$ la viscosité dudit fluide à une pression $\overline{P}$
- $Z$ le facteur compressibilité dudit fluide à ladite pression $\overline{P}$,
- $m_f$ la pseudo-pression à l'état final
- $m_i$ la pseudo-pression à l'état initial du réservoir,
- $P_f$ la pression du réservoir à l'état final, et
- $m(\overline{P})$ une pseudo pression moyenne dudit bloc matriciel définie comme :

$$m(\overline{P}) = \frac{\mu_{ref}Z_{ref}}{P_{ref}} \int_{P_{ref}}^{\overline{P}} \frac{\overline{P}}{\mu Z} d\overline{P}$$

En variante, ledit facteur correctif pour les régimes d'échanges transitoires en deux dimensions $\beta_{m-2D}^{ST}(\overline{P})$ s'écrit par une formule du type : $\beta_{m-2D}^{ST}(\overline{P}) = SC \cdot \beta_{m-1D}^{ST}(\overline{P})$ avec

$$\beta_{m-1D}^{ST}(\overline{P}) = \frac{P_{ref}/\mu_{ref}Z_{ref}}{\overline{P}/\mu Z} \frac{8}{\pi^3} \frac{(m_f - m_i)^2}{[P_f - \overline{P}][m(\overline{P}) - m_i]}$$

et

$$SC = 1 + \left( \frac{\frac{1}{L_{eq}^{0}{}^2}}{\frac{1}{L_{eq}^{LT}{}^2}} - 1 \right) \left[ \frac{m - \frac{m_f + m_i}{2}}{m_i - \frac{m_f + m_i}{2}} \right]$$

avec

- $P_{ref}$ une pression de référence,
- $\mu_{ref}$ la viscosité à ladite pression de référence,
- $Z_{ref}$ le facteur de compressibilité dudit fluide à ladite pression de référence,
- $\overline{P}$ la pression moyenne d'un bloc matriciel dudit milieu matriciel,
- $\mu$ la viscosité dudit fluide à une pression $\overline{P}$
- Z le facteur compressibilité du fluide à ladite pression $\overline{P}$,
- $m_f$ la pseudo-pression à l'état final
- $m_i$ la pseudo-pression à l'état initial du réservoir,
- $P_f$ la pression du réservoir à l'état final,
- $m(\overline{P})$ une pseudo pression moyenne dudit bloc matriciel définie comme :

$$m(\overline{P}) = \frac{\mu_{ref} Z_{ref}}{P_{ref}} \int_{P_{ref}}^{\overline{P}} \frac{\overline{P}}{\mu Z} d\overline{P} \, ,$$

- $L_{eq}^{0}$ une longueur équivalente d'un bloc matriciel à une dimension au temps initial du régime transitoire, et
- $L_{eq}^{ST}$ une longueur équivalente d'un bloc matriciel à une dimension au temps final du régime transitoire.

Conformément à une mise en oeuvre de l'invention, on détermine ledit facteur correctif pour les régimes d'échanges pseudo-permanent.

Selon une variante, ledit facteur correctif pour les régimes pseudo permanent en une dimension $\beta_{m-1D}^{LT}(\overline{P})$ ou en deux dimensions $\beta_{m-2D}^{LT}(\overline{P})$ s'écrit par une formule du type:

$$\beta_{m-1D}^{LT}(\overline{P}) = \beta_{m-2D}^{LT}(\overline{P}) = \frac{P_{ref}/\mu_{ref} Z_{ref}}{\overline{P}/\mu Z} \frac{\left[ m_f - m(\overline{P}) \right]}{\left[ P_f - \overline{P} \right]}$$

avec

- $P_{ref}$ une pression de référence,
- $\mu_{ref}$ la viscosité à ladite pression de référence,
- $Z_{ref}$ le facteur de compressibilité dudit fluide à ladite pression de référence,
- $\overline{P}$ la pression moyenne d'un bloc matriciel dudit milieu matriciel,
- $\mu$ la viscosité dudit fluide à la pression $\overline{P}$
- Z le facteur compressibilité dudit fluide à la pression $\overline{P}$,
- $m_f$ la pseudo-pression à l'état final
- $m_i$ la pseudo-pression à l'état initial du réservoir,
- $P_f$ la pression du réservoir à l'état final, et
- m(P) la pseudo pression moyenne dudit bloc matriciel définie comme :

$$m(\overline{P}) = \frac{\mu_{ref} Z_{ref}}{P_{ref}} \int_{P_{ref}}^{\overline{P}} \frac{\overline{P}}{\mu Z} d\overline{P}$$

Selon une caractéristique de l'invention, préalablement à l'étape a) on détermine et on stocke une pluralité de valeurs de facteurs correctifs, et à l'étape b), on détermine ledit facteur correctif parmi lesdites valeurs stockées.

De préférence, on calcule ledit flux d'échanges $f_p$ au moyen d'une relation du type : $f_p = CP_{mp}\Delta\Phi_p$, avec C un coefficient géométrique défini par $C = \Delta A \cdot \Delta B \cdot \Delta C \cdot I_V(X)$, avec $\Delta A, \Delta B, \Delta C$ les dimensions de ladite maille, $I_V(X)$ un facteur de forme, $\Delta\Phi_p$ la différence de potentiel et $P_{mp}$ une propriété relative aux fluides et au milieu matriciel.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des caractéristiques précédentes, lorsque ledit programme est exécuté sur un ordinateur.

**Présentation succincte des figures**

D'autres caractéristiques et avantages du procédé selon l'invention, apparaîtront à la lecture de la description ci-après et d'exemples non limitatifs de réalisations, en se référant aux figures annexées et décrites ci-après.

La figure 1 illustre une projection horizontale d'un bloc pour un premier exemple.
Pour ce premier exemple, la figure 2 illustre des courbes de la production de gaz P en fonction du temps T, d'après une référence (*i.e.* d'après le modèle de référence maillant finement le bloc), d'après deux procédés selon l'art antérieur, et d'après le procédé selon l'invention.
La figure 3 illustre une projection horizontale d'un réservoir à gaz pour un deuxième exemple.
La figure 4 illustre des courbes de la production de gaz P en fonction du temps T pour le deuxième exemple, pour une référence, pour un procédé selon l'art antérieur, et pour le procédé selon l'invention.

**Description détaillée de l'invention**

Le procédé selon l'invention permet d'optimiser l'exploitation d'un gisement d'hydrocarbures, notamment lorsque celui-ci comporte un réseau de fractures. A partir de données sismiques, de données de puits, et de données sédimentaires et lithologiques, on construit un modèle géologique, c'est-à-dire une représentation maillée, du gisement étudié, consistant en une représentation détaillée de sa réelle complexité interne. Ce modèle comporte un ensemble de mailles, chacune des mailles de cette représentation comportant une ou plusieurs valeurs de propriétés relatives au gisement étudié. De plus, chaque maille contient une image du réseau de fractures. Ce modèle forme un milieu poreux complexe, composé d'un ensemble de blocs matriciels poreux, de formes et tailles irrégulières. Chacun des blocs est délimité par des fractures.

Compte tenu de sa complexité géométrique, un tel modèle, bien que représentatif, ne peut être utilisé pour effectuer des prévisions de production du gisement. Il est indispensable de le simplifier en un modèle dit « équivalent ». On appelle « milieu équivalent » un milieu dont l'estimation de la récupération d'huile lors d'un processus de déplacement, tel que l'imbibition capillaire, est sensiblement la même que l'estimation de la récupération d'huile effectuée sur le milieu poreux complexe, i.e. représentatif des diverses formes et dimensions des blocs matriciels constituant le gisement considéré.

Ainsi, à partir de ce modèle géologique, selon l'art antérieur, on construit un modèle simplifié (simplification par équivalence à un modèle de type Warren & Root), dit « équivalent », constitué de blocs de dimensions et formes identiques qui possèdent les mêmes propriétés pétrophysiques et se comportent de manière équivalente en terme de récupération d'huile. Par exemple, le critère d'équivalence est fondé sur la récupération d'huile lors du processus d'imbibition capillaire des blocs mis en jeu lors d'une injection d'eau (selon la demande de brevet FR 2.757.957 (US 6.064.944)).

Selon l'invention, on utilise ce même modèle simplifié pour simuler de manière fiable et précise la production de fluides, aussi bien compressibles qu'incompressibles, issue des blocs au cours du temps. On réalise alors des simulations d'écoulement, qui permettent de calculer des prévisions de production plus représentatives, plus fiables, plus précises, et plus nombreuses. Le procédé selon l'invention permet de prendre des décisions de développement moins risquées et plus rapidement.

La présente invention requiert de disposer :

- de mesures de propriétés relatives à la formation étudiée : il peut s'agir de mesures de propriétés pétrophysiques réalisées in situ, en différents points de la formation étudiée, telles que la porosité, la perméabilité, et la lithologie (c'est-à-dire le type de roche), la perméabilité relative ou encore la pression capillaire. Ces mesures peuvent avoir été obtenues par exemple par carottage, via des diagraphies réalisées dans des puits, par des campagnes d'acquisition sismique. Mais il peut s'agir aussi de mesures (débits d'huile, débits d'eau, variations de pression par exemple) liées aux écoulements dans la couche étudiée, obtenues par exemple par des mises en production du fluide en certains puits traversant la formation, au cours de tests de puits ou encore de tests d'interférence. Ces propriétés peuvent notamment être utilisées pour construire une représentation maillée de la formation étudiée. Afin de caractériser au mieux le réseau de fractures présent dans ladite formation, il peut aussi s'agir de mesures concernant l'orientation, le pendage ou encore l'extension des fractures présentes dans la formation étudiée, ces informations étant déterminées par exemple à partir de mesures diagraphiques ou sur des affleurements.

- d'une représentation maillée représentative de la formation étudié : appelée aussi « modèle de réservoir », il s'agit d'une sorte de maquette du sous-sol construite dans le but de décrire aussi précisément que possible la structure, les propriétés pétrophysiques de la formation étudiée, ou encore les propriétés des fluides présents dans la formation. Cette maquette est généralement représentée sur un ordinateur, et consiste en un maillage ou grille, chacune des mailles de cette grille comportant une ou plusieurs valeurs de propriétés relatives à la formation étudiée (porosité, perméabilité, saturation, etc). Un modèle de réservoir se doit de vérifier autant que possible les propriétés relatives à la formation étudiée collectées sur le terrain : les données de diagraphie mesurées le long des puits, les mesures réalisées sur des échantillons de roche prélevés dans les puits, les données déduites de campagnes d'acquisition sismique, les données de production comme les débits d'huile, d'eau, les variations de pression etc. Le spécialiste en simulation de réservoir a pleine connaissance de méthodes pour construire une telle représentation maillée d'une formation. A noter que le modèle de réservoir peut se confondre avec le modèle géologique lorsque la puissance informatique est suffisante pour permettre des calculs numériques de simulation d'écoulement sur une grille à mailles fines. Dans les autres cas, le spécialiste pourra avoir recours à une technique d' « upscaling » (mise à l'échelle) afin de passer d'un modèle aux mailles fines (le modèle géologique) à un modèle aux mailles plus grossières (le modèle de réservoir). Cette étape d'upscaling peut être réalisée par exemple à l'aide du logiciel CobraFlow (IFP Energies nouvelles, France).

- d'un simulateur d'écoulement : un simulateur d'écoulement est un programme numérique, exécuté sur un ordinateur, qui est utilisé pour prédire l'écoulement de fluides au sein d'une formation. La simulation d'écoulement, dite aussi simulation de réservoir, consiste à prédire numériquement la production d'un fluide piégé dans une ou plusieurs couches d'une formation souterraine, la production nécessitant l'existence d'au moins un puits injecteur (dans lequel on injecte un autre fluide, qui va chasser le fluide piégé) et d'un puits producteur (vers lequel le fluide piégé, chassé va se déplacer et duquel il va pouvoir être extrait). Avantageusement, on aura recours à un simulateur d'écoulement dit « double milieu », qui permet de modéliser les échanges entre les blocs de roches non fracturés (blocs matriciels) et le réseau de fractures, sans nécessiter la discrétisation de ces blocs. Un exemple d'un tel simulateur est le logiciel PUMAFLOW (IFP Energies nouvelles, France).

Le procédé selon l'invention comporte quatre étapes :

1- Discrétisation du gisement en un ensemble de mailles

2- Modélisation du réseau de fractures

3- Simulation des écoulements de fluides

4- Optimisation des conditions de production du gisement

1- Discrétisation du gisement en un ensemble de mailles

Lors de cette étape, on discrétise le gisement en un ensemble de mailles, dans le but d'avoir une représentation du gisement.
Depuis longtemps, l'industrie pétrolière allie les mesures sur champ (in situ) aux modélisations expérimentales (réalisées au laboratoire) et/ou numériques (réalisées au moyen de logiciels).
Les modélisations des gisements pétroliers, constituent donc une étape technique indispensable à toute exploration ou exploitation de gisement. Ces modélisations ont pour but de fournir une description du gisement, caractérisée par la structure/géométrie et les propriétés pétrophysiques des dépôts ou formations géologiques qui le constituent.
Ces modélisations se basent sur une représentation du gisement en un ensemble de mailles. Chacune de ces mailles représente un volume donné du gisement, et constitue un volume élémentaire du gisement. L'ensemble des mailles constitue une représentation maillée (ou discrète) du gisement, appelée modèle géologique.

2- Modélisation du réseau de fractures

Lors de cette étape, on modélise le réseau de fractures du gisement, dans le but d'avoir une représentation du gisement traversé par les fractures.
Pour prendre en compte le rôle du réseau de fractures dans la simulation des écoulements au sein du gisement, il est nécessaire d'associer à chacun de ces volumes élémentaires (les mailles) une modélisation des fractures.
Ainsi, selon l'invention, on part d'un modèle géologique du gisement étudié, c'est-à-dire d'une représentation plus ou moins détaillée du réseau de fractures, aussi fidèle que possible des observations directes et indirectes du réservoir faites par les spécialistes en charge de la caractérisation du réservoir. Ce modèle constitue un milieu poreux complexe composé d'un ensemble de blocs matriciels poreux, de formes et tailles irrégulières, délimités par des fractures. Ce milieu poreux complexe constitue une image représentative du réseau réel de fractures délimitant les blocs matriciels.

Pour mettre en oeuvre une telle méthode, on peut utiliser des logiciels de modélisation, bien connus des spécialistes, tel que le logiciel FRACAFlow® (IFP Energies nouvelles, France).

En raison de son extrême complexité géométrique, le modèle géologique précédent, représentatif du réservoir fracturé réel, ne peut être utilisé directement pour simuler, *i.e.* reproduire et/ou prédire, la production du gisement lors de la mise en oeuvre d'un procédé de récupération, tel que l'injection d'eau par exemple.

Pour contourner cet obstacle, on simplifie ce modèle du milieu poreux complexe réel. On applique alors une approche « double-milieu », appelée aussi "approche double porosité", proposée par exemple par Warren J.E. et al. (Réf. : "The Behavior of Naturally Fractured Reservoirs", SPE Journal (septembre 1963), 245-255). L'approche "double porosité" consiste à considérer le milieu fracturé comme deux continua de propriétés contrastées et échangeant des fluides entre eux : le continuum "fracture" (ou "fissure") constitué du réseau de fractures et le continuum "matrice" constitué des blocs matriciels, la réunion des deux continua constituant un "double milieu". Les simulateurs de réservoir reposant sur cette approche sont dits simulateurs à "double porosité" ou "double milieu".

La mise en oeuvre d'un simulateur « double milieu » utilise le calcul des échanges entre chacune des deux mailles fracture et matrice représentant le dit « double milieu » en tout élément de volume (ou maille) du réservoir. Classiquement, ce calcul s'appuie sur la représentation simplifiée équivalente (de type Warren & Root), selon laquelle la distribution de blocs géologiques est représentée par un ensemble de blocs « équivalents » identiques et de forme parallélépipédique, de dimensions ($L_x$, $L_y$, $L_z$). L'obtention de cette représentation simplifiée fait l'objet de la demande de brevet FR 2.757.957 (US 6.064.944). Le procédé selon l'invention repart de cette représentation simplifiée communément utilisée par les simulateurs de réservoir fracturé.

3- Simulation des écoulements de fluides

*Principe*

A ce stade, l'ingénieur réservoir dispose d'une représentation géologique du gisement d'hydrocarbures fracturé, dont il souhaite extraire les hydrocarbures.

On utilise alors un outil bien connu des spécialistes : un simulateur de réservoir à double milieu. Chacune des deux grilles (ensemble de mailles) de ce simulateur de réservoir est renseignée par des données d'entrées $E(t)$ qui peut concerner d'une part les propriétés (par exemple faciès lithologique, perméabilités de matrice et de fissure ($K_m$, $K_f$), porosités de matrice et de fissure ($\Phi_m$, $\Phi_f$), ...) liées à chacun des deux milieux "matrice" (pour la grille dite "matrice") et "fracture" (pour la grille dite "fissure"), et d'autre part des propriétés liées aux fluides renfermés par ces deux milieux (par exemple masses volumiques, viscosités,...). Pour cette représentation, on considère les échanges au sein du milieu fracture, les échanges au sein du milieu matrice, et les échanges entre le milieu matrice et le milieu fracture pour un couple de mailles donné.

Au moyen de ces informations, le simulateur peut déterminer, en chaque maille, et pour chaque pas de temps t, divers paramètres $S(t)$, tels que la saturation ($S_m$, $S_f$) de phase (eau ou huile par exemple) dans chacun des deux milieux matrice et fissure, la pression de fluide ($P_m$, $P_f$) correspondante dans chacun des deux milieux, éventuellement la concentration, la température, etc., suivant la nature du procédé de récupération (injection d'eau, de gaz, etc...). Pour ce faire, le simulateur résout deux ensembles d'équations couplées, un premier ensemble relatif au milieu matriciel, et un deuxième ensemble relatif au milieu fracturé. Ces deux jeux d'équations sont couplés, via un terme de flux, exprimant les transferts de masse et/ou d'énergie (dits "échanges matrice-fissure") entre la roche poreuse (blocs de matrice) et les fractures qui la traversent. Ce flux d'échange matrice-fracture *(f)* dépend de la différence de potentiel ($\Delta\Phi$) entre ces deux milieux, celle-ci s'exprimant comme une différence de pression, température, etc..., suivant la nature du processus physique d'échange mis en jeu par le procédé de récupération appliqué.

Selon un mode de réalisation du procédé selon l'invention, le facteur de proportionnalité C, appelé facteur d'échange, peut être calculé d'après une solution connue du flux d'échange en régime pseudo-permanent et qui indique

$$C = \frac{\pi^2}{L_x^2} + \frac{\pi^2}{L_y^2} + \frac{\pi^2}{L_z^2}$$

que : (dans le cas général s'opérant dans les 3 directions x, y, z) Avec $L_x$, $L_y$, $L_z$ les dimensions selon les directions d'échange x, y et z.

Afin d'accroître la fiabilité et la précision des simulations d'écoulement de divers fluides (liquides ou gazeux), le procédé de l'invention prend en compte un facteur correctif des flux d'échange qui corrige les importantes erreurs sur ces flux liées à la compressibilité du fluide et la faible perméabilité de la matrice.

*Détermination d'un facteur correctif du flux d'échange*

Lors de cette opération, on détermine un facteur correctif du flux d'échange. Cette opération peut être réalisée avant, simultanément ou après l'opération de détermination du flux d'échange, étant donné que ces deux valeurs sont déterminées de manière indépendante. Le facteur correctif a pour but de corriger le flux d'échange pour obtenir une simulation plus précise.

Selon l'invention, le facteur correctif du flux d'échange est dépendant de la pression initiale du gisement et de la pression minimale de production imposée aux puits producteurs.

Ainsi, le facteur correctif permet de prendre en compte, lors de la simulation, les écoulements des fluides compressibles, tels que les gaz. De plus, le facteur correctif permet de prendre en compte la perméabilité du milieu matriciel.

Selon un mode de réalisation de l'invention, le facteur correctif du flux d'échange est obtenu au moyen d'une formulation en pseudo-pressions des équations d'écoulement des fluides dans le gisement. Cette formulation en pseudo-pression est utilisée classiquement pour l'interprétation des tests de puits à gaz (fluides compressibles), qui nécessite un traitement particulier consistant à transformer les données/mesures de pression en pseudo-pression selon une transformation destinée à intégrer les variations sensibles des propriétés du fluide en fonction de la pression (un exemple d'une telle formulation en pseudo-pression est décrit notamment dans l'ouvrage Hagoort, J. (1988) Fundamentals of Gas Reservoir Engineering, Developments in Petroleum Science, 23, Elsevier).

Conformément à un mode de réalisation de l'invention, un facteur correctif du flux d'échange peut être calculé pour le régime transitoire, dit également de « temps courts », et un autre facteur correctif peut être calculé pour le régime pseudo-permanent, dit également de « temps longs ». Le régime transitoire correspond aux phases initiales d'envahissement de la maille par le fluide. Le régime pseudo-permanent débute lorsque le flux d'échange devient proportionnel à la différence de potentiel (ex.: la différence des pressions ou pseudo-pressions, la différence de température, ...) entre les deux milieux matrice et fissure, avec un facteur de proportionnalité indépendant du temps. Le procédé selon l'invention applique alors le facteur correctif en fonction du régime dans lequel se trouve l'écoulement du fluide.

Selon une variante de réalisation de l'invention, on peut déterminer le facteur correctif du flux d'échange, variable en fonction de la pression décrite lors de l'exploitation du réservoir considéré, au moyen des étapes suivantes :

- le facteur correctif en question est issu d'une formulation en pseudo-pression des équations d'écoulement (telle qu'utilisée par la profession pour interpréter les tests de puits à gaz) : il s'écrit ainsi comme une fonction des pseudo-pression et pression courantes ; toutefois, en raison de la correspondance connue entre les variables de pseudo-pression et de pression pour le fluide considéré (connaissant l'évolution de la viscosité et de la compressibilité de ce fluide en fonction de la pression), on peut finalement calculer ce facteur comme une simple fonction de la pression.
- il est tenu compte de la succession dans le temps d'un régime d'échanges transitoires (aux « temps courts », mais qui en réalité peuvent être longs dans le cas de champs à matrice très peu perméable), et d'un régime aux temps longs dit « pseudo-permanent » : en conséquence, la valeur du facteur correctif est issue de formules distinctes selon qu'on se situe dans l'un ou l'autre des deux régimes.
- la transition entre les deux régimes (donc entre les deux modes de calcul) s'effectue pour une valeur de la pseudo-pression égale à la valeur moyenne $\dfrac{m_f + m_i}{2}$ de l'intervalle des valeurs de pseudo-pression décrit lors de l'exploitation ($m_i$ et $m_f$ étant les valeurs de pseudo-pression correspondant à la pression initiale du réservoir d'une part et à la pression finale imposée via les puits dans les fractures d'autre part).
- le facteur correctif peut être formulé pour des échanges monodirectionnels ou pluridirectionnels, compte tenu de la connaissance des flux exacts aux temps initiaux et des flux « pseudo-permanents » aux temps longs.

Selon une mise en oeuvre de l'invention, les valeurs de cette fonction corrective du flux d'échange en fonction de la pression peuvent être déterminées préalablement puis stockées dans une mémoire (notamment une mémoire informatique), par exemple sous forme de tableau. Ces valeurs peuvent ensuite être lues comme donnée d'entrée (par exemple sous forme de simple tableau donnant la pression en première colonne, et la valeur pré-calculée du coefficient correctif de flux en deuxième colonne).

Selon une variante de réalisation, le facteur correctif pour le régime d'échange transitoire à une dimension (1 D) $\beta_{m-1D}^{ST}(\overline{P})$ peut s'écrire par une formule du type:

$$\beta_{m-1D}^{ST}(\overline{P}) = \frac{P_{ref}/\mu_{ref}\,Z_{ref}}{\overline{P}/\mu Z}\frac{8}{\pi^3}\frac{\left(m_f - m_i\right)^2}{\left[P_f - \overline{P}\right]\left[m(\overline{P}) - m_i\right]}$$

avec

- $P_{ref}$ une pression de référence,
- $\mu_{ref}$ la viscosité à la pression de référence,
- $Z_{ref}$ le facteur de compressibilité du fluide à la pression de référence,
- $\overline{P}$ la pression moyenne du bloc matriciel,
- $\mu$ la viscosité du fluide à la pression $\overline{P}$
- $Z$ le facteur compressibilité du fluide à la pression $\overline{P}$,
- $m_f$ la pseudo-pression à l'état final (état lorsque la pression du réservoir est égale à la pression minimale imposée en fond de puits)
- $m_i$ la pseudo-pression à l'état initial du réservoir,
- $P_f$ la pression du réservoir à l'état final (égale à la pression minimale imposée dans les fractures via le(s) puits de production), et

$$m(\overline{P}) = \frac{\mu_{ref}\,Z_{ref}}{P_{ref}}\int_{P_{ref}}^{\overline{P}}\frac{\overline{P}}{\mu Z}d\overline{P}\,.$$

- m(P) la pseudo pression moyenne du bloc matriciel définie comme :

Selon une variante de réalisation, le facteur correctif pour les régimes d'échanges transitoires à deux dimensions (*i.e.* selon 2 directions x et y du bloc parallélépipédique du milieu matrice), $\beta_{m-2D}^{ST}(\overline{P})$, peut s'écrire par une formule

du  type :  $\beta_{m-2D}^{ST}(\overline{P}) = SC.\beta_{m-1D}^{ST}(\overline{P})$  avec  $\beta_{m-1D}^{ST}(\overline{P}) = \dfrac{P_{ref}/\mu_{ref}\,Z_{ref}}{\overline{P}/\mu Z}\dfrac{8}{\pi^3}\dfrac{\left(m_f - m_i\right)^2}{\left[P_f - \overline{P}\right]\left[m(\overline{P}) - m_i\right]}$  et

$$SC = 1 + \left(\frac{\dfrac{1}{{L_{eq}^0}^2}}{\dfrac{1}{{L_{eq}^{LT}}^2}} - 1\right)\left[\frac{m - \dfrac{m_f + m_i}{2}}{m_i - \dfrac{m_f + m_i}{2}}\right]$$  avec les définitions précédentes ainsi que celles qui suivent :

- $m = m(\overline{P})$ la pseudo pression moyenne du bloc matriciel,
- $L_{eq}^0$ la dimension équivalente du bloc matriciel au début du régime transitoire (lorsque $_{m=m_i}$), qui est égale à la

$$L_{eq}^0 = \frac{L_x L_y}{L_x + L_y}\,,$$

longueur équivalente du bloc pour un échange 1 D soit :  pour un bloc dont les dimensions selon les directions d'échange x et y sont égales à $L_x$ et $L_y$

- $L_{eq}^{LT}$ la longueur équivalente du bloc matriciel à la fin du régime transitoire et durant le régime pseudo-permanent

$$L_{eq}^{LT} = \frac{1}{\sqrt{\dfrac{1}{L_x^{\,2}} + \dfrac{1}{L_y^{\,2}}}}\,.$$

définie comme suit :

Selon une variante de réalisation, le facteur correctif pour les régimes pseudo permanent en une dimension

$\beta_{m-1D}^{LT}(\overline{P})$ ou en deux dimensions $\beta_{m-2D}^{LT}(\overline{P})$ s'écrit par une formule du type:

$$\beta_{m-1D}^{LT}(\overline{P}) = \beta_{m-2D}^{LT}(\overline{P}) = \frac{P_{ref}/\mu_{ref}\,Z_{ref}}{\overline{P}/\mu Z}\frac{\left[m_f - m(\overline{P})\right]}{\left[P_f - \overline{P}\right]}$$

avec les notations précédemment utilisées, notamment en prenant en compte $L_{eq}^{LT}$.

Il est à noter que le procédé selon l'invention s'applique également à des fluides peu compressibles mais avec des facteurs correctifs pouvant être déterminés plus simplement en fonction de la seule pression (et non des pseudo-pressions).

*Simulation des écoulements*

Lors de cette étape, on simule les écoulements de fluide(s) dans le gisement, au moyen du modèle double-milieu, des flux d'échange et des facteurs correctifs déterminés. L'ingénieur réservoir peut choisir un procédé de production, par exemple le procédé de récupération par injection d'eau, dont il demeure ensuite à préciser le scénario optimal de mise en oeuvre pour le champ considéré. La définition d'un scénario optimal d'injection d'eau peut consister, par exemple, à fixer le nombre et l'implantation (position et espacement) des puits injecteurs et producteurs afin de tenir compte au mieux de l'impact des fractures sur la progression des fluides au sein du réservoir.

En fonction du scénario choisi, de la représentation double milieu du gisement, de la formule reliant le flux d'échange de masse et/ou d'énergie à la différence de potentiel matrice-fracture, et du facteur correctif du flux d'échange, on est alors capable de simuler la production d'hydrocarbures escomptée, au moyen du simulateur d'écoulement dit à double milieu. Le simulateur fait alors usage de ce facteur correctif pour calculer une valeur précise du flux d'échange à chaque pas de temps de la simulation caractérisé par une valeur donnée de la pression.

A tout instant $t$ de la production simulée, à partir des données d'entrées $E(t)$ (données fixes ou variables au fur et à mesure du temps simulé), de la formule reliant le flux ($f$) d'échange à la différence de potentiel ($\Delta\Phi$), et du facteur correctif du flux d'échange, le simulateur résout l'ensemble des équations propres à chaque maille et chacune des deux grilles du modèle (équations faisant intervenir la formule d'échange matrice-fissure décrite plus haut) et délivre ainsi les valeurs solutions des inconnues $S(t)$ (saturations, pressions, concentrations, températures, ...) à cet instant $t$. De cette résolution, découle la connaissance des quantités d'huile produites et de l'état du gisement (distribution des pressions, saturations, etc...) à l'instant considéré. Toutefois, le flux d'échange tel que calculé actuellement selon l'hypothèse de régime d'échange pseudo-permanent et fluides peu compressibles doit être multiplié par le facteur correctif $\beta_{m-1D}^{ST}(\overline{P})$ ou $\beta_{m-2D}^{ST}(\overline{P})$ au cours de la période transitoire d'échange (1 D ou 2D respectivement), puis par le facteur correctif $\beta_{m-1D}^{LT}(\overline{P}) = \beta_{m-2D}^{LT}(\overline{P})$ au cours de la période transitoire d'échange pseudo-permanent débutant lorsque la pseudo-pression est égale à $\dfrac{m_f + m_i}{2}$. Pour un échange matrice-fissure régi par la pression, on rappelle l'expression actuelle du flux massique d'échange pseudo-permanent :

$$Q_{fm}^{LT}(\overline{P}) = \rho\frac{\pi^2}{L^2}\frac{k_m}{\mu}\left[P_f - \overline{P}\right]$$

où $\rho$ est la masse volumique du fluide, $\mu$ la masse volumique du fluide, $k_m$ la perméabilité du milieu matriciel. L est la longueur d'échange égale à la dimension du bloc selon la direction d'échange pour un échange 1D, ou à la longueur équivalente $L_{eq}$ telle que: $\dfrac{1}{L_{eq}^2} = SC\dfrac{1}{L_{eq}^{LT\,2}}$ (où SC est tel que défini plus haut) pour un échange selon deux directions du bloc parallélépipédique.

4- Optimisation des conditions de production du gisement (EXP)

A partir des simulations réalisées lors des étapes précédentes, les spécialistes peuvent déterminer plusieurs schémas d'exploitation correspondant à différentes configurations possibles d'exploitation du réservoir souterrain : emplacement des puits producteurs et/ou injecteurs, valeurs cibles pour les débits par puits et/ou pour le réservoir, le type d'outils utilisés, les fluides utilisés, injectés et/ou récupérés... Pour chacun de ces schémas, il convient de déterminer leurs prévisions de production. Ces prévisions de production probabilistes sont obtenues au moyen d'un logiciel de simulation d'écoulement ainsi qu'au moyen du modèle numérique de réservoir fracturé. Une simulation de réservoir est une technique permettant de simuler les écoulements de fluides au sein d'un réservoir au moyen d'un logiciel appelé simulateur d'écoulement, et du modèle de réservoir. Par exemple, le logiciel PumaFlow ® (IFP Énergies nouvelles, France) est un simulateur d'écoulement.

On définit un ou plusieurs schémas d'exploitation possibles adapté au modèle de réservoir fracturé (appelé également modèle géologique). Pour chacun de ces schémas, on détermine les réponses par simulation.

A partir des prévisions de productions probabilistes définies pour chaque schéma d'exploitation, les spécialistes peuvent par comparaison choisir le schéma d'exploitation qui leur semble le plus pertinent. Par exemple :

- en comparant le maximum du volume d'huile récupéré, on peut déterminer le schéma de production susceptible de fournir le maximum de récupération ou d'être le plus rentable.

- en comparant l'écart type du volume d'huile récupéré, on peut déterminer le schéma de production le moins risqué.

On exploite alors le réservoir selon le schéma d'exploitation défini par exemple en forant de nouveaux puits (producteur ou injecteur), en modifiant les outils utilisés, en modifiant les débits et/ou la nature de fluides injectés...

Le procédé selon l'invention est particulièrement adapté pour la production de fluides compressibles (gaz) dans des réservoirs très peu perméables. En effet, il permet de tenir compte de la compressibilité des fluides et de la perméabilité du réservoir. Toutefois, le procédé selon l'invention peut être utilisé pour tout type de fluide et tout type de réservoir.

L'invention concerne par ailleurs un produit programme d'ordinateur téléchargeable depuis un réseau de communication et/ou enregistré sur un support lisible par ordinateur et/ou exécutable par un processeur. Ce programme comprend des instructions de code de programme pour la mise en oeuvre du procédé tel que décrit ci-dessus, lorsque le programme est exécuté sur un ordinateur.

De manière générale, l'invention permet de prévoir le comportement hydrodynamique (débit, pression,..) des champs fracturés (ou considérés et modélisés comme tels) en réponse à des sollicitations extérieures imposées via des puits lors de la production d'hydrocarbures.

Les ingénieurs en charge de l'exploitation du gisement ont alors un outil leur permettant de rapidement et précisément évaluer la performance de différents scénarios de production, et ainsi, de sélectionner celui qui optimise l'exploitation au regard des critères sélectionnés par l'opérateur, par exemple d'assurer une production d'hydrocarbure optimale en termes de débit et de récupération.

Ainsi, l'invention trouve une application industrielle dans l'exploitation de tout type de gisement souterrain traversé par un réseau de fractures. Il peut s'agir, par exemple, d'un gisement d'hydrocarbures pour lequel on souhaite optimiser la production, ou un gisement de stockage de gaz par exemple, pour lequel on souhaite optimiser l'injection ou les conditions de stockage.

**Exemples d'application**

On présente deux exemples à titre d'illustration des avantages de la présente invention.

Exemple 1 : production à l'échelle d'un bloc matriciel

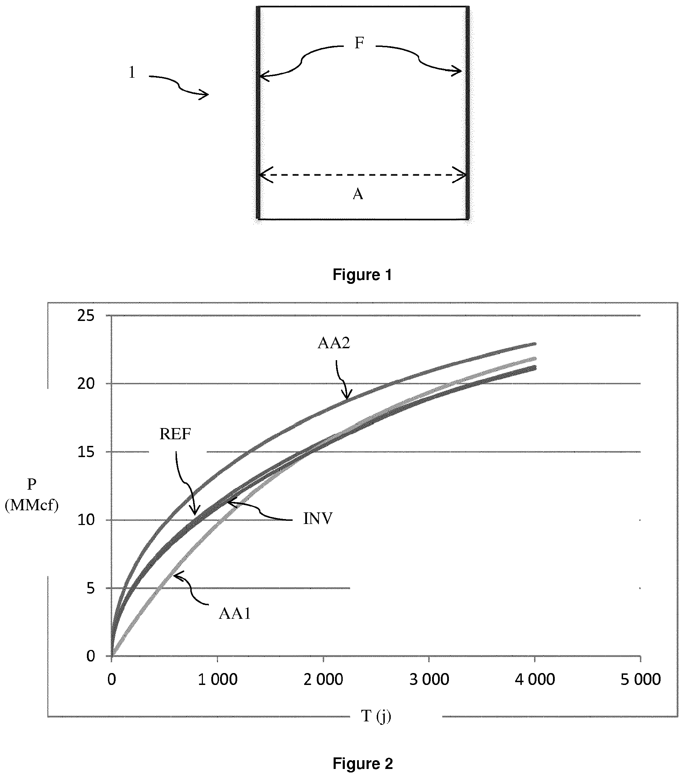

On cherche à prédire la production issue d'un bloc de matrice parallélépipédique par deux de ses faces opposées. La figure 1 montre une projection horizontale du bloc parallélépipédique 1. Le bloc est limité par deux fractures F, par lesquelles la production du bloc est sollicitée. Le bloc est supposé initialement saturé de gaz et d'eau interstitielle (immobile), et à une pression de 3800 psi (262 bar). Une pression de 1000 psi (70 bar) est imposée et maintenue constante dans les deux fractures à partir de cet instant initial. Les autres frontières du bloc sont supposées imperméables. Dans l'exemple simulé, les deux fractures très minces (0.01 pied d'ouverture soit environ 3 mm) sont espacées d'une longueur A de 200 pieds (soit environ 61 m) et la matrice a une perméabilité de 100 nanoDarcy (0.0001 mD).

Pour cet exemple, on détermine la production de référence REF, c'est-à-dire la solution exacte calculée au moyen d'un modèle discrétisant très finement le bloc matriciel et les deux fractures qui le limitent. De plus, on évalue la production en appliquant à cet exemple différents modèles double-milieu, qui ne comportent qu'une seule maille double milieu, c'est-à-dire une maille fissure et une maille matrice. Le premier modèle selon l'art antérieur AA1, avec facteur de forme constant (de l'anglais « constant shape factor ») correspond à la prévision de la production d'un simulateur de réservoir double milieu conventionnel, qui ne tient pas compte des échanges transitoires aux temps courts, ni des effets de la compressibilité du fluide sur le calcul des échanges entre les mailles matrice et fracture d'un modèle double-milieu. Le deuxième modèle selon l'art antérieur AA2, avec facteur de forme variable (de l'anglais « variable shape factor »), correspond à la prévision de la production avec correction des flux aux temps courts mais selon un formalisme en pression, c'est-à-dire sans tenir compte des erreurs de flux d'échange liées à la forte modification des propriétés en gaz en fonction de la pression. Le troisième modèle selon l'invention INV, correspond à la détermination du flux d'échange avec une correction de ce flux basée sur un formalisme des échanges en pseudo-pression.

La figure 2 illustre la production du gaz P en MMcf (million de pieds cubes, un pied cube valant sensiblement 28,3 litres) en fonction du temps T en jours, pour la production de référence REF, pour les évaluations avec les modèles selon l'art antérieur AA1 et AA2, et selon l'invention INV. On remarque que le modèle selon l'art antérieur AA1 ne reproduit pas la courbe de production de référence, car il sous-estime la production aux temps courts, et la surestime aux temps longs. De plus, le modèle selon l'art antérieur AA2 ne donne pas satisfaction car il surestime la production. En revanche, le modèle selon l'invention INV donne une prévision de production très proche de la solution de référence REF, quel que soit l'instant de production considéré.

Exemple 2 : production à l'échelle d'un volume de réservoir

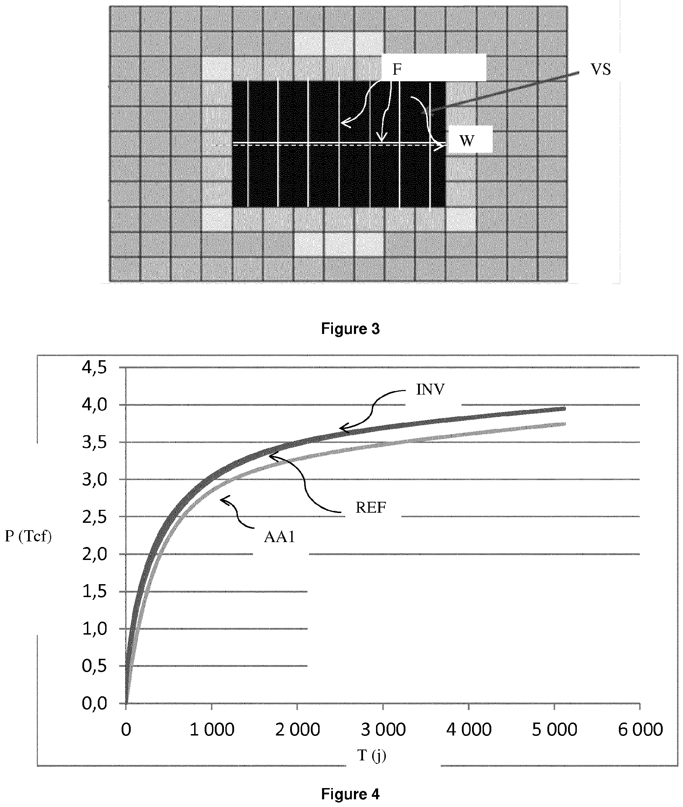

De la même manière, on cherche à prédire la production issue d'une portion de réservoir. La figure 3 illustre la portion de réservoir mise en production au moyen d'un puits W horizontal qui recoupe un réseau de fractures F bidirectionnelles constitué de deux familles de fractures verticales orthogonales, généré par stimulation du puits. Ces fractures F sont supposées délimiter des blocs matriciels de 100 pieds par 100 pieds (environ 30,5 m) selon les directions X et Y, dans la zone stimulée VS entourant le puits. Les échanges matrice-fracture sont cette fois bidirectionnels, c'est-à-dire qu'ils s'opèrent selon les directions X et Y. Au-delà de la zone stimulée VS (1400 pieds x 1000 pieds x 300 pieds, soit environ 427 m x 305 m x 91,5 m), le réservoir n'est pas fracturé et se comporte comme un simple milieu possédant les propriétés de la matrice identiques à celles du cas précédent.

Pour cet exemple, on détermine la production de référence REF, c'est-à-dire la solution exacte calculée au moyen d'un modèle discrétisant très finement chacun des blocs matriciels et chacune des fractures F de la zone stimulée VS autour du puits. De plus, on évalue la production en appliquant à cet exemple différents modèles double-milieu, qui comportent des mailles de 200 pieds x 200 pieds x 300 pied (environ 61 m x 61 m x 91,5 m). Le premier modèle selon l'art antérieur AA1, avec facteur de forme constant (de l'anglais « constant shape factor ») correspond à la prévision de la production d'un simulateur de réservoir double milieu conventionnel, qui ne tient pas compte des échanges transitoires aux temps courts, ni des effets de la compressibilité du fluide sur le calcul des échanges entre les mailles matrice et fracture d'un modèle double-milieu. Le deuxième modèle selon l'invention INV, correspond à la détermination du flux d'échange et d'un terme correctif du flux d'échange. Le terme correctif du flux d'échange dépend des pressions initiale et minimale du gisement.

La figure 4 illustre la production du gaz P en Tcf ($10^{12}$ pieds cubes) en fonction du temps T en jours, pour la production de référence REF, pour les évaluations avec les modèles selon l'art antérieur AA1, et selon l'invention INV. On remarque que le modèle selon l'art antérieur AA1 ne reproduit pas la courbe de production de référence, car il sous-estime la production aux temps courts. En revanche, le modèle selon l'invention INV reproduit de manière fidèle les prévisions du modèle de référence REF.

**Revendications**

1. Procédé pour l'exploitation d'un gisement de fluide traversé par un réseau de fractures, dans lequel, à partir de mesures de propriétés relatives audit gisement, on construit une représentation maillée dudit gisement, chaque maille de ladite représentation comportant un milieu matriciel et un milieu fracturé, et dans lequel on connaît la pression initiale dudit gisement et la pression minimale de production dudit gisement, **caractérisé en ce qu'**on réalise les étapes suivantes :

   a) on détermine en chaque maille un flux d'échange intervenant entre ledit milieu matriciel et ledit milieu fracturé ;
   b) on détermine un facteur correctif dudit flux d'échange au moyen de ladite pression initiale dudit gisement et de ladite pression minimale de production dudit gisement ;
   c) on simule les écoulements dudit fluide dans ledit gisement au moyen d'un simulateur d'écoulement, dudit flux d'échange et dudit facteur correctif ; et

d) on optimise l'exploitation dudit gisement au moyen de ladite simulation desdits écoulements.

2. Procédé selon la revendication 1, dans lequel lesdites étapes a) et b) sont réalisées dans cet ordre, simultanément ou dans l'ordre inverse.

3. Procédé selon l'une des revendications précédentes, dans lequel ledit facteur correctif dudit flux d'échange est obtenu au moyen d'une formulation en pseudo-pression des équations d'écoulement du fluide dans le gisement.

4. Procédé selon l'une des revendications précédentes, dans lequel on détermine ledit facteur correctif pour les régimes d'échanges transitoires.

5. Procédé selon la revendication 4, dans lequel ledit facteur correctif pour les régimes d'échanges transitoires en une dimension $\beta_{m-1D}^{ST}(\overline{P})$ s'écrit par une formule du type :

$$\beta_{m-1D}^{ST}(\overline{P}) = \frac{P_{ref}/\mu_{ref}Z_{ref}}{\overline{P}/\mu Z} \frac{8}{\pi^3} \frac{(m_f - m_i)^2}{[P_f - \overline{P}][m(\overline{P}) - m_i]}$$

avec

- $P_{ref}$ une pression de référence,
- $\mu_{ret}$ la viscosité à la pression de référence,
- $Z_{ref}$ le facteur de compressibilité dudit fluide à ladite pression de référence,
- $\overline{P}$ la pression moyenne d'un bloc matriciel dudit milieu matriciel,
- $\mu$ la viscosité dudit fluide à une pression $\overline{P}$
- $Z$ le facteur compressibilité dudit fluide à ladite pression $\overline{P}$,
- $m_f$ la pseudo-pression à l'état final
- $m_i$ la pseudo-pression à l'état initial du réservoir,
- $P_f$ la pression du réservoir à l'état final, et
- $m(\overline{P})$ une pseudo pression moyenne dudit bloc matriciel définie comme :

$$m(\overline{P}) = \frac{\mu_{ref}Z_{ref}}{P_{ref}} \int_{P_{ref}}^{\overline{P}} \frac{\overline{P}}{\mu Z} d\overline{P}$$

6. Procédé selon la revendication 4, dans lequel ledit facteur correctif pour les régimes d'échanges transitoires en deux dimensions $\beta_{m-2D}^{ST}(\overline{P})$ s'écrit par une formule du type :

$$\beta_{m-2D}^{ST}(\overline{P}) = SC.\beta_{m-1D}^{ST}(\overline{P})$$

avec

$$\beta_{m-1D}^{ST}(\overline{P}) = \frac{P_{ref}/\mu_{ref}Z_{ref}}{\overline{P}/\mu Z} \frac{8}{\pi^3} \frac{(m_f - m_i)^2}{[P_f - \overline{P}][m(\overline{P}) - m_i]}$$

et

$$SC = 1 + \left( \frac{\dfrac{1}{L_{eq}^{0\ 2}}}{\dfrac{1}{L_{eq}^{LT\ 2}}} - 1 \right) \left[ \frac{m - \dfrac{m_f + m_i}{2}}{m_i - \dfrac{m_f + m_i}{2}} \right]$$

avec

- $P_{ref}$ une pression de référence,
- $\mu_{ref}$ la viscosité à ladite pression de référence,
- $Z_{ref}$ le facteur de compressibilité dudit fluide à ladite pression de référence,
- $\overline{P}$ la pression moyenne d'un bloc matriciel dudit milieu matriciel,
- $\mu$ la viscosité dudit fluide à une pression $\overline{P}$
- $Z$ le facteur compressibilité du fluide à ladite pression $\overline{P}$,
- $m_f$ la pseudo-pression à l'état final
- $m_i$ la pseudo-pression à l'état initial du réservoir,
- $P_f$ la pression du réservoir à l'état final,
- $m(\overline{P})$ une pseudo pression moyenne dudit bloc matriciel définie comme :

$$m(\overline{P}) = \frac{\mu_{ref}\, Z_{ref}}{P_{ref}} \int_{P_{ref}}^{\overline{P}} \frac{\overline{P}}{\mu Z} d\overline{P} ,$$

- $L_{eq}^{0}$ une longueur équivalente d'un bloc matriciel à une dimension au temps initial du régime transitoire, et
- $L_{eq}^{ST}$ une longueur équivalente d'un bloc matriciel à une dimension au temps final du régime transitoire.

**7.** Procédé selon l'une des revendications précédentes, dans lequel on détermine ledit facteur correctif pour les régimes d'échanges pseudo-permanent.

**8.** Procédé selon la revendication 7, dans lequel ledit facteur correctif pour les régimes pseudo permanent en une dimension $\beta_{m-1D}^{LT}(\overline{P})$ ou en deux dimensions $\beta_{m-2D}^{LT}(\overline{P})$ s'écrit par une formule du type :

$$\beta_{m-1D}^{LT}(\overline{P}) = \beta_{m-2D}^{LT}(\overline{P}) = \frac{P_{ref}\Big/\mu_{ref}\, Z_{ref}}{\overline{P}\Big/\mu Z} \frac{\left[ m_f - m(\overline{P}) \right]}{\left[ P_f - \overline{P} \right]} \quad \text{avec}$$

- $P_{ref}$ une pression de référence,
- $\mu_{ref}$ la viscosité à ladite pression de référence,
- $Z_{ref}$ le facteur de compressibilité dudit fluide à ladite pression de référence,
- $\overline{P}$ la pression moyenne d'un bloc matriciel dudit milieu matriciel,
- $\mu$ la viscosité dudit fluide à la pression $\overline{P}$
- $Z$ le facteur compressibilité dudit fluide à la pression $\overline{P}$,
- $m_f$ la pseudo-pression à l'état final
- $m_i$ la pseudo-pression à l'état initial du réservoir,
- $P_f$ la pression du réservoir à l'état final, et
- $m(\overline{P})$ la pseudo pression moyenne dudit bloc matriciel définie comme :

$$m(\overline{P}) = \frac{\mu_{ref}\, Z_{ref}}{P_{ref}} \int_{P_{ref}}^{\overline{P}} \frac{\overline{P}}{\mu Z} d\overline{P}$$

**9.** Procédé selon l'une des revendications précédentes, dans lequel préalablement à l'étape a) on détermine et on stocke une pluralité de valeurs de facteurs correctifs, et à l'étape b), on détermine ledit facteur correctif parmi lesdites valeurs stockées.

**10.** Procédé selon l'une des revendications précédentes, dans lequel on calcule ledit flux d'échanges $f_p$ au moyen d'une relation du type : $f_p = CP_{mp}\Delta\Phi_p$, avec C un coefficient géométrique défini par $C = \Delta A \cdot \Delta B \cdot \Delta C \cdot I_V(X)$, avec $\Delta A, \Delta AB, \Delta C$ les dimensions de ladite maille, $I_V(X)$ un facteur de forme, $\Delta\Phi_p$ la différence de potentiel et $P_{mp}$ une propriété relative aux fluides et au milieu matriciel.

**11.** Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des revendications précédentes, lorsque ledit programme est exécuté sur un ordinateur.

Figure 1

Figure 2

**Figure 3**

P (Tcf)

T (j)

**Figure 4**

Europäisches
Patentamt

European
Patent Office

Office européen
des brevets

**RAPPORT DE RECHERCHE EUROPEENNE**

Numéro de la demande

EP 16 30 6687

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 2 813 668 A1 (IFP ENERGIES NOUVELLES [FR]) 17 décembre 2014 (2014-12-17) | 1-4,7, 9-11 | INV. E21B49/00 |
| A | * abrégé * <br> * alinéa [0021] - alinéa [0022] * <br> * alinéa [0042] - alinéa [0047] * <br> * alinéa [0090] - alinéa [0093] * <br> ----- | 5,6,8 | |
| Y | EHSAN RANJBAR ET AL: "Matrixfracture transfer shape factor for modeling flow of a compressible fluid in dual-porosity media", <br> ADVANCES IN WATER RESOURCES, CML PUBLICATIONS, SOUTHAMPTON, GB, <br> vol. 34, no. 5, <br> 22 février 2011 (2011-02-22), pages 627-639, XP028407459, <br> ISSN: 0309-1708, DOI: <br> 10.1016/J.ADVWATRES.2011.02.012 <br> [extrait le 2011-02-27] | 1-4,7, 9-11 | |
| A | * 1. Introduction * <br> * 3. Derivation of the shape factor for compressible fluids * <br> ----- | 5,6,8 | |
| A | Pallav Sarma: "NEW TRANSFER FUNCTIONS FOR SIMULATION OF NATURALLY FRACTURED RESERVOIRS WITH DUAL POROSITY MODELS", <br> , <br> 1 mai 2003 (2003-05-01), XP055310617, <br> Extrait de l'Internet: <br> URL:http://lya.fciencias.unam.mx/pablo/mis docs/reservoir/transfer.pdf <br> [extrait le 2016-10-13] <br> * 3.6 A Generic Shape Factor Formulation * <br> ----- | 1-11 | |

DOMAINES TECHNIQUES RECHERCHES (IPC)

E21B

-/--

Le présent rapport a été établi pour toutes les revendications

| Lieu de la recherche | Date d'achèvement de la recherche | Examinateur |
|---|---|---|
| La Haye | 13 juin 2017 | Hustedt, Bernhard |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    .............................................................
& : membre de la même famille, document correspondant

EPO FORM 1503 03.82 (P04C02)

Europäisches
Patentamt

European
Patent Office

Office européen
des brevets

## RAPPORT DE RECHERCHE EUROPEENNE

Numéro de la demande

EP 16 30 6687

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Loran Taabbodi: "Transient Shape Factors for Thermal Flow Simulation in Fractured Reservoirs", , 1 septembre 2015 (2015-09-01), XP055310622, Extrait de l'Internet: URL:http://theses.ucalgary.ca/bitstream/11023/2476/4/ucalgary_2015_taabbodi_loran.pdf [extrait le 2016-10-13] * abrégé * * 4.2.2 Solution Methodology * ----- | 1-11 | |
| A | Yu Didier Ding ET AL: "Numerical Simulation of Low Permeability Unconventional Gas Reservoirs", SPE/EAGE European Unconventional Resources Conference and Exhibition, 1 janvier 2014 (2014-01-01), XP055310414, DOI: 10.2118/167711-MS * le document en entier * ----- | 1-11 | |
| A | K T Lim ET AL: "Matrix-fracture transfer shape factors for dual-porosity simulators", Journal of Petroleum Science and Engineering, vol. 13, 1 janvier 1995 (1995-01-01), pages 69-178, XP055310422, DOI: 10.1016/0920-4105(95)00010-F * le document en entier * ----- -/-- | 1-11 | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 13 juin 2017 | Hustedt, Bernhard |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 16 30 6687

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | K.S. Lai ET AL: "Assessment of Different Matrix-fracture Shape Factor in Double Porosity Medium", Journal of Applied Sciences, vol. 13, no. 2, 1 février 2013 (2013-02-01), pages 308-314, XP055310443, PK ISSN: 1812-5654, DOI: 10.3923/jas.2013.308.314 * le document en entier * ----- | 1-11 | |
| A | EHSAN RANJBAR ET AL: "Effect of fracture pressure depletion regimes on the dual-porosity shape factor for flow of compressible fluids in fractured porous media", ADVANCES IN WATER RESOURCES, CML PUBLICATIONS, SOUTHAMPTON, GB, vol. 34, no. 12, 26 septembre 2011 (2011-09-26), pages 1681-1693, XP028115016, ISSN: 0309-1708, DOI: 10.1016/J.ADVWATRES.2011.09.010 [extrait le 2011-10-01] * le document en entier * ----- | 1-11 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 13 juin 2017 | Hustedt, Bernhard |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 30 6687

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-06-2017

| Document brevet cité au rapport de recherche | Date de publication | Membre(s) de la famille de brevet(s) | Date de publication |
|---|---|---|---|
| EP 2813668 A1 | 17-12-2014 | CA 2854085 A1<br>EP 2813668 A1<br>FR 3007165 A1<br>US 2014372042 A1 | 13-12-2014<br>17-12-2014<br>19-12-2014<br>18-12-2014 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2925726 A **[0019]**
- US 8386225 B **[0019]**
- FR 3007165 A **[0019]**
- US 20140372042 A1 **[0019]**
- FR 2757957 **[0036] [0050]**
- US 6064944 A **[0036] [0050]**

### Littérature non-brevet citée dans la description

- **WARREN J.E. et al.** The Behavior of Naturally Fractured Reservoirs. *SPE Journal,* Septembre 1963, 245-255 **[0009] [0049]**
- **KAZEMI, H. ; MERRILL, L.S. ; PORTERFIELD, K.L. ; ZEMAN, P.R.** Numerical Simulation of Water-Oil Flow in Naturally Fractured Reservoirs. *SPE Journal,* Décembre 1976, 317 **[0018]**
- Fundamentals of Gas Reservoir Engineering. **HAGOORT, J.** Developments in Petroleum Science. Elsevier, 1988, 23 **[0059]**